# EUROPÄISCHE PATENTSCHRIFT

(11) **EP 0 590 626 B1**
(45) Veröffentlichungstag und Bekanntmachung des Hinweises auf die Patenterteilung: **21.02.1996**
(21) Anmeldenummer: 93115692.1
(22) Anmeldetag: 29.09.1993
(51) Int. Cl.: D21B 1/32

(54) **Verfahren zur Aufbereitung von bedrucktem Altpapier**
Process for treating printed waste paper
Procédé de traitement de vieux papiers imprimés

(30) Priorität: 02.10.1992 DE 4233286
(43) Veröffentlichungstag der Anmeldung: 06.04.1994
(73) Patentinhaber: J.M. Voith GmbH, D-89522 Heidenheim (DE)
(72) Erfinder: Ortner, Herbert, Dr., D-89522 Heidenheim (DE); Dörflinger, Hans-Dieter, D-89518 Heidenheim (DE)
(74) Vertreter: Weitzel, Wolfgang, Dr.-Ing. Patentanwalt

(56) Entgegenhaltungen:
- EP-A- 0 092 124
- EP-A- 0 354 307
- EP-A- 0 398 846
- WO-A-93/06295
- DE-A- 2 413 278
- FR-A- 1 477 336
- GB-A- 1 429 626

## Beschreibung

Der Einsatz von deinktem Altpapier als Faserstoffkomponente ist Stand der Technik bei der Herstellung von Zeitungsdruckpapieren, Kopierpapieren, hygienischen Papieren und Karton.

Ziel der gegenwärtigen Entwicklung ist auch der Einsatz von Deinkingstoffen für hochwertige Druckpapiere, wie z.B. Streichrohpapiere, LWC und SC-Papiere (Tief- und Offsetdruck). Für diese Einsatzfälle ist sowohl eine hohe Sauberkeit als auch ein hoher Weißgrad erforderlich. Gelingt es, deinkte Stoffe in der geforderten Qualität herzustellen, wird die Nachfrage entsprechend hoch sein, d.h. daß dann ausgesuchte, saubere Altpapiersorten nicht in ausreichendem Maß zur Verfügung sein werden. Es muß dann auf sogenannte "Haushaltssammelware", bestehend aus ca. 40 bis 60 % gelesenen Tageszeitungen und 60 bis 40 % illustrierten Zeitschriften, ausgewichen werden. Das Deinkingverfahren muß deshalb für dieses Altpapier konzipiert werden.

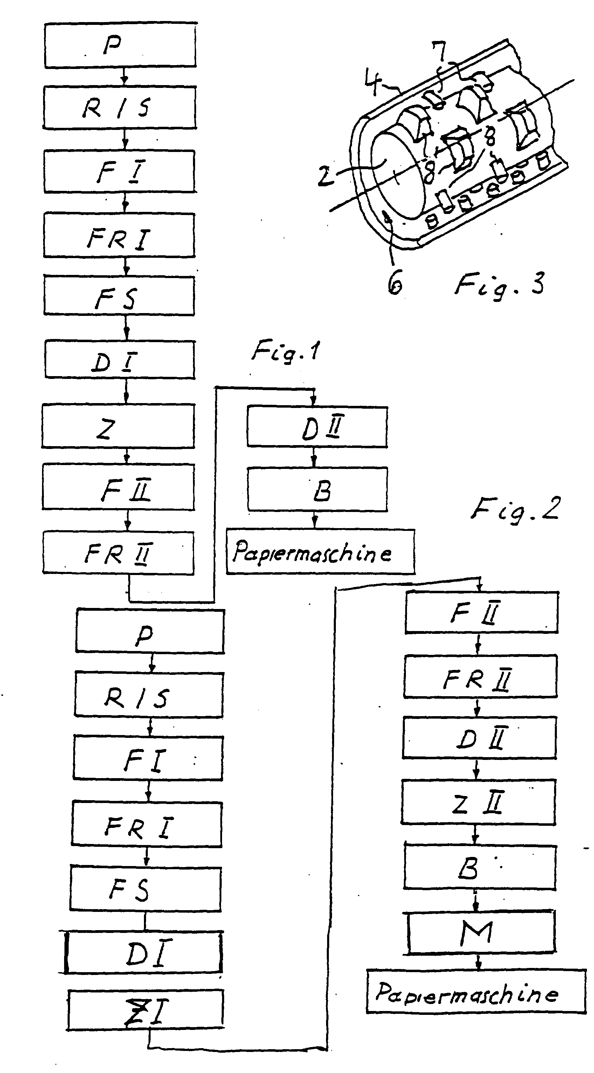

Das heute für Zeitungsdruck-Deinkingstoff bevorzugte Verfahren verwendet neben verschiedenen in den Reinigungsstufen eingesetzten Hydrozyklonen und Siebsortierern die Flotation, wie die ersten Stufen von Fig. 1 zeigen. Diese beruht auf einem Verfahrensvorschlag für sogenannte SC-Papiere, wie er bereits diskutiert wurde. Es wurde darüber auch in der Fachpresse referiert. Mit diesem Verfahren lassen sich deinkte Stoffe mit hohem Weißgrad und guter Sauberkeit herstellen. In Abhängigkeit vom eingetragenen Altpapier wird es jedoch vorkommen, daß die Sauberkeit für diese hochwertigen Druckpapiere nicht ausreicht, d.h. daß der deinkte Altpapierstoff z.B. mehr Schmutzpunkte enthalten kann als z.B. der gleichzeitig als Faserstoffkomponente eingesetzte Holzschliff.

Nach Versuchen zeigt ein Vergleich zwischen Holzschliff und einem Deinkingstoff, der im Dispergiergerät gleichzeitig gebleicht und dann nachflotiert wurde, daß dieser Stoff zwar für die Herstellung von Zeitungsdruckpapier gut geeignet wäre, nicht jedoch für hochwertige Druckpapiere.

Als Dispergiermaschine werden üblicherweise Scheibenzerfaserungsmaschinen eingesetzt, insbesondere um störende, klebende Substanzen so zu zerkleinern und unter die Sichtbarkeitsgrenze zu verteilen, daß diese den Papiererzeugungsprozeß nicht mehr stören.

Zur Vergleichmäßigung (Homogenisierung) von Farbteilchen sind auch sogenannte Einwellenzerfaserer bekannt, insbesondere in Aufbereitungsanlagen der Kartonerzeugung (Voith Sonderdruck 2066 = Wochenblatt für Papierfabrikation Nr. 23/24 (1977), 981-985.

EP-A-0 398 846 offenbart ein Verfahren zur Aufbereitung von bedrucktem Altpapier durch Auflösung, verschiedene Reinigungsstufen, Flotation und Dispergierung, wobei eine Nachmahlung der Dispergierung nachgeschaltet ist. Bei diesem Verfahren ist nur ein Dispergierstufe vorgesehen.

Aus WO-A-9 306 295 sind bereits die Merkmale 1 bis 1.4 von Patentanspruch 1 bekanntgeworden. Diese Druckschrift fällt unter Artikel 54(3) EPÜ.

Die Aufgabe ist, einen Altpapierstoff aus deinktem Altpapier bereitzustellen, der einen entsprechenden Weißgrad aufweist, um in hochwertigen Druckpapieren eingesetzt zu werden.

Diese Aufgabe wird durch die Merkmale von Patentanspruch 1 gelöst.

Man erhält einen Papierrohstoff, welcher die erforderlichen Sauberkeitswerte für Streichrohpapiere der Qualität LWC und SC-Papiere (z.B. für Tief- oder Offsetdruck) aufweist. Auch die Weiße und Helligkeit entsprechen den dafür bestehenden Ansprüchen.

Ein aus EP 0 122 868-A1 bekannter, vielstufiger Refiner dient nur dem Zweck, bei niedriger Konsistenz die Stoffparameter, wie Entwässerbarkeit und Festigkeit, von Holzstoff zu verbessern.

Die nachfolgende Tabelle gibt die gemessenen Werte, insbesondere die Anzahl der Schmutzpunkte, nach den verschiedenen Verfahrensstufen und für Holzstoff jeweils bei einem spezifischen Arbeitsbedarf von 75 kWh/t otro an.

Alle Messungen wurden mit einem TASS-Plus-Bildanalysegerät der Firma LEITZ durchgeführt.

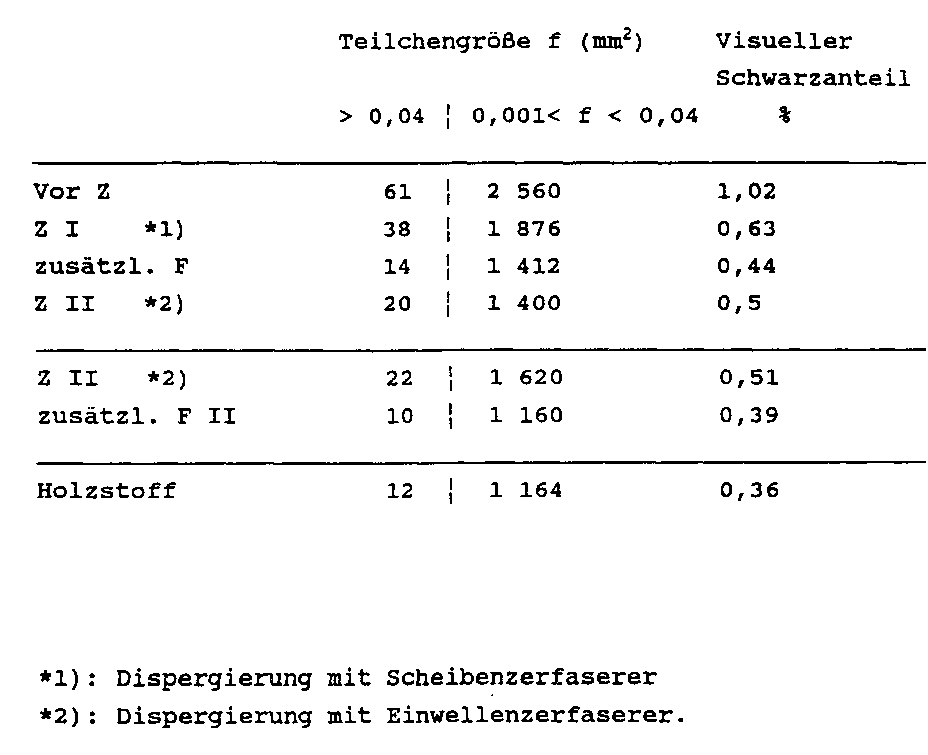

Nachfolgend wird die Erfindung anhand den Figuren der Zeichnung erläutert.
Figur 1 stellt ein bekanntes Prinzipbild und
Figur 2 ein Prinzipbild des Aufbereitungsverfahrens nach der Erfindung,
Figur 3 eine Skizze eines Einwellen-Zerfaserers
Figur 4 ein Prinzipbild eines Scheibenzerfaserers und
Figur 5 ein Prinzipbild mit verschiedenen, weiteren Schaltungsvarianten dar.

In den Schemata der Altpapieraufbereitung werden folgende Symbole gebraucht:
- P: Auflösung, allgemein im Stofflöser,
- R: Vorreinigung,
- S: Vorsortierung,
- F: Flotation,
- FR: Feinreinigung,
- FS: Feinsortierung,
- D: Eindickung (Entwässerung bzw. Wäsche),
- Z: Dispergierung (Zerfaserung),
- B: Bleiche.

Gemäß der Erfindung wird nach Fig. 2 eine doppelte Flotation, nämlich FI und FII, und eine doppelte Dispergierung, ZI und ZII, vorgesehen. Die Feinreinigung findet dabei im allgemeinen in Hydrozyklonen statt, die vielfach auch als Cleaner bezeichnet werden. Für die Feinsortierung werden Siebsortierer mit Siebkörben benutzt, die entweder eine Sieblochung oder schlitzförmige Siebperforation aufweisen. Die entsprechenden Dimensionen der Perforationen sind in der Fachwelt allgemein bekannt. Ebenso bekannt sind auch die chemischen Formulierungen für die Flotation, Bleiche und Dispergierung.

Vorteilhafterweise wird in der ersten Zerfaserungsstufe ZI eine sogenannte Dispergierbleiche durchgeführt, wobei sich folgende Formulierung anbietet, jeweils in Prozent, bezogen auf otro-Altpapier: H₂O₂ (100 %) 0,5-1,5, Natriumsilikat (37 Bé) 1,1, NaOH (100 %) 0,3. Die Stoffkonsistenz beträgt dabei vorzugsweise zwischen 24 und 30 %. Die Bleichdauer liegt etwa bei 3 Minuten, und die Verarbeitungstemperatur in diesem Apparat vorzugsweise zwischen 75 und 95°C. Ferner kommt als Zusatz noch in Frage DTPA (40 %-Lösung) 0,3 bis 0,5-Sammler 0,5, Flotationshilfsmittel 0,5. Letztere Chemikalie kann aber auch hinter dem Zerfaserer in einer Mischbütte bzw. dem Mischbehälter der Flotationsanlage eingegeben werden.

Man kann statt der ersten Flotationsstufe FI auch eine Wäsche anwenden. Vorzugsweise wird in der zweiten Zerfaserungsstufe, in dem Einwellen-Zerfaserer, ohne Dampfzugabe, gearbeitet. Im allgemeinen liegt die Temperatur zwischen 20 und 115°C, höchstens 140°C, jedoch ist die üblicherweise gegebene Arbeitstemperatur von etwa 40°C auch anwendbar, so daß man für einen empfehlenswerten Bereich 38 bis 85°C annehmen kann. Der spezifische Arbeitsbedarf in der zweiten Zerfaserungsstufe liegt zwischen 30 und 80 kWh/t otro.

Man kann bei den angegebenen Temperaturen auch mit Druckgasbeaufschlagung (Luft oder Stickstoff z.B.) bei z.B. um 1,4 bar, also ohne entsprechend hochgespannten Dampf - bei Temperaturen ab 100°C -, in den Dispergiermaschinen, insbesondere auch im Einwellen-Zerfaserer, arbeiten.

Eine abschließende Bleichstufe kann als Hydrosulfit-Bleiche, z.B. mit Natriumdithionit, oder es kann auch bei beiden Bleichstufen eine Peroxid-Bleiche stattfinden. Man kann auch umgekehrt im Falle der unterschiedlichen Bleichchemikalien verfahren.

Man kann auch die zweite Flotationsstufe FII eventuell fortlassen, falls die Altpapierqualität es erlaubt. Man hätte dann zwei direkt hintereinandergeschaltete Zerfaserungsbzw. Dispergierstufen ZI und ZII.

Zwischen den beiden Zerfaserungsmaschinen können neben einer Bleiche verschiedene Reinigungsstufen, auch kombiniert bzw. in Reihe eingesetzt werden, wie z.B. eine Cleaneranlage und/oder Wäsche, um entsprechend der Zusammensetzung der abgelösten Schmutzteilchen sowie deren Größe und Gewicht den entsprechenden, auf die Reinigungsanlage bezogenen Anteil der Schmutzteilchen bereits hier zu entfernen.

Am vorteilhaftesten ist es, dann bzw. auch sonst im überwiegenden Maß eine nachgeschaltete Flotationsstufe F II vorzusehen (siehe Tabelle).

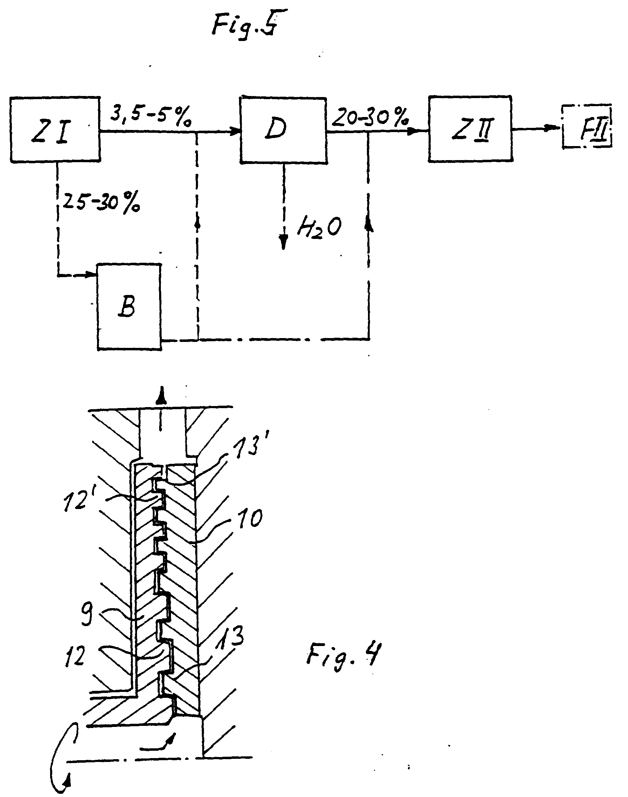

Die Weite des Knetraumes 6 (siehe Fig. 3) beträgt vorzugsweise mindestens 30 mm und kann bis 80 mm und mehr betragen, während die Länge des Knetraumes (Länge der Erzeugenden der Zylinderflächen) im allgemeinen mindestens 60 cm beträgt. Je nach Durchsatzmenge kann die Weite des Knetraumes variieren. In Fig. 3 sind die stabförmigen Knetelemente (kurze zylindrische Stücke) des Rotors 2 mit 8 und die Gegenelemente etwa gleicher Form des Stators 4 mit 7 bezeichnet. Die Elemente des Rotors insbesondere können auch etwa quaderförmig oder pyramidenförmig ausgebildet sein, wie mit 8' im oberen Teil der Figur angedeutet.

Nach Fig. 5 sind verschiedene Schaltungsvarianten möglich, wobei an den Leitungen die Konsistenzwerte bzw. -bereiche angegeben sind. Die Bleiche B im Turm bringt den Vorteil mit sich, daß eine für das nachfolgende Dispergiergerät günstige Quellung der Papierfasern erfolgt. Die Bleichdauer beträgt zwischen 20 und 120 min.

Die Scheiben des Scheibenzerfaserers können vorzugsweise zahn-, klotz- oder höckerartige Defibrierelemente aufweisen. Die Spaltweiten liegen im üblichen Rahmen und betragen zwischen 0,5 und 12 mm, welche stark abhängig vom spezifischen Arbeitsverbrauch ist; ein weiterer Einfluß beruht auf der Stoffbeschaffenheit (wie Mahlgrad) und der Chemikalienzugabe. Der spezifische Arbeitsverbrauch beträgt auch vorzugsweise 60 bis 80 KWh/t otro. Die Klötze (Zähne) der Rotorscheibe 9 und der Statorscheibe 10, die in der in Fig. 4 gezeichneten Weise zusammenwirken, haben z.B. eine Höhe zwischen 8 und 12 mm und eine Breite und Dicke zwischen 8 und 15 mm. Dabei sind die radial inneren Zähne 12, 13 kräftiger als die äußeren Zähne 12', 13'.

Durch die Nachmahlung (mit "M" im Diagramm gekennzeichnet) - z.B. mittels sogenanntem Refiner -, werden Mahlgrad, Festigkeit und Entwässerungsfähigkeit verbessert.

Diese Nachmahlung kann im Hochstoffdichtebereich von ca. 30 % erfolgen. Als Nachmahlgerät ist der Einscheibenrefiner mit Abfuhr der Suspension unter Schwerkrafteinwirkung bevorzugt.

Die Dispergierung findet ja im allgemeinen im Hochkonsistenzbereich von mindestens 20 % statt. Durch die zweite Dispergierstufe mit dem Einwellenzerfaserer erhält man durch die Faserreibung eine günstige Verreibung noch verbliebener Schmutzpunkte. Die abschließende Mahlung stellt die Stoffeigenschaften für die erforderliche Qualität insbesondere des SC-Papieres her. Es ist so, daß bei Anwendung des Einscheibenzerfaserers als Nachmahlstufe eine besondere Faserschonung dadurch eintritt, daß sie mit dieser Maschine wenig gekürzt werden.

Eine gleichartige Beeinflussung der Fasercharakteristik wie durch die genannte Mahlung am Ende des Prozesses durch eine sogenannte Hochkonsistenzmahlung in der Dispergiermaschine, die im allgemeinen als Scheibendispergierer ausgebildet ist, kann nicht erreicht werden.

## Patentansprüche

1. Verfahren zur Aufbereitung von bedrucktem Altpapier, insbesondere Altpapier, das überwiegend Haushaltssammelware und/oder Kaufhausabfälle enthält, durch Auflösung (P), verschiedene Reinigungsstufen (R, S, FRI, FRII, FS) Flotation (FI, FII) oder Wäsche und Dispergierung (ZI, ZII), mit folgenden Merkmalen:
1.1 es sind zwei Dispergierstufen (ZI, ZII) vorgesehen;
1.2 die erste Dispergierstufe (ZI) wird mit einem Scheibenzerfaserer durchgeführt;
1.3 die zweite Dispergierstufe (ZII) wird mit einer Knetmaschine, z.B. mit einem Ein-Wellen-Zerfaserer (2, 4) durchgeführt, bei einer Temperatur zwischen 20 und l10°C, am besten zwischen 38 und 65°C;
1.4 beide Dispergierstufen (ZI, ZII) werden bei einem Arbeitsbedarf von 30 bis 150 kWh/t otro, am besten von 30 bis 80 kWh/t otro durchgeführt;
1.5 der zweiten Dispergierstufe (ZII) ist eine Nachmahlung (M) bei einer Konsistenz von mindestens 20 % nachgeschaltet.

2. Verfahren nach Anspruch 1, dadurch gekennzeichnet, daß nach der Nachmahlungsstufe (M) keine Feinreinigungs- oder Feinsortierstufe mehr folgt.

3. Verfahren nach Anspruch 1 oder 2, dadurch gekennzeichnet, daß die beiden Dispergierstufen (ZI, ZII) unmittelbar bzw. ohne eine zwischengeschaltete, zusätzliche Flotationsstufe aufeinanderfolgen.

4. Einrichtung zur Durchführung des Verfahrens nach einem der Ansprüche 1 bis 3, dadurch gekennzeichnet, daß eine Flotationsstufe nach den zwei Dispergierstufen (ZI, ZII) geschaltet ist.

## Claims

1. Process for treating printed waste paper, in particular waste paper comprising mainly collected household goods and/or department store waste by dissolving (P), several cleaning stages, (R, S, FRI, FRII, FS), floatation (FI, FII) or washing and dispersing (ZI, ZII), with the following features
1.1 there are two dispersing stages (ZI, ZII)
1.2 the first dispersing stage (ZI) is carried out using a disc shredder;
1.3 the second dispersing stage (Zll) is carried out using a kneading machine, e.g. with a single-shaft shredder (2, 4) at a temperature of between 20 and 110°C, preferably between 38 and 65°C;
1.4 both dispersing stages (ZI, ZII) are carried out with an input of 30 to 150 kWh/t oven dry, preferably from 30 to 80 kwh/t oven-dry;
1.5 the second dispersing stage (Zll) is followed by beating (M) with a consistency of at least 20%.

2. Process according to Claim, 1, characterised in that after the beating stage (M) there is no subsequent fine cleaning or fine sorting stage.

3. Process according to claim 1 or 2, characterised in that both dispersion stages (ZI, ZII) follow one another directly or without an intermediate additional floatation stage.

4. Device for carrying out the process according to one of claims 1 to 3, characterised in that a floatation stage follows the two dispersion stages (ZI, ZII).

## Revendications

1. Procédé de traitement de vieux papiers imprimés, en particulier de vieux papiers qui contiennent principalement des produits de collecte domestique et/ou des déchets de maisons commerciales, par dissolution (P), différentes étapes de nettoyage (R, S, FRI, FRII, FS), flottation (FI, FII), ou lavage et dispersion (ZI, ZII), avec les caractéristiques suivantes :
1.1 deux étapes de dispersion (ZI, ZII) ont été prévues ;
1.2 la première étape de dispersion (ZI) a été réalisée avec un défibreur à disques ;
1.3 la deuxième étape de dispersion (ZII) est effectuée avec une machine à pétrir, par exemple avec un défibreur à un arbre (2,4) à une température comprise entre 20 et 110°C, au mieux entre 38 et 65°C ;
1.4 les deux étapes de dispersion (ZI, ZII) sont effectuées avec un besoin d'énergie de 30 à 150 kWh/t séchée à l'étuve, au mieux de 30 à 80 kWh/t séchées à l'étuve ;
1.5 à la deuxième étape de dispersion (ZII) est intercalé à la suite un broyage ultime (M) avec une consistance d'au moins 20 %.

2. Procédé selon la revendication 1, caractérisé en ce que à l'étape de broyage ultime (M), ne fait plus suite une étape de nettoyage fin ou de triage fin.

3. Procédé selon les revendications 1 ou 2, caractérisé en ce que les deux étapes de dispersion (ZI et ZII) se suivent directement ou sans étape de flottation supplémentaire intercalée.

4. Dispositif pour la réalisation du procédé selon une des revendications 1 à 3, caractérisé en ce qu'une étape de flottation est disposée après les deux étapes de dispersion (ZI, ZII).
